(19) Europäisches Patentamt
European Patent Office
Office européen des brevets

(11) Veröffentlichungsnummer: **0 591 879 A1**

# (12) EUROPÄISCHE PATENTANMELDUNG

(21) Anmeldenummer: **93115954.5**

(22) Anmeldetag: **02.10.93**

(51) Int. Cl.$^5$: **B29C 65/14**, C09J 4/06, //B29K33/04

(30) Priorität: **08.10.92 DE 4233891**

(43) Veröffentlichungstag der Anmeldung: **13.04.94 Patentblatt 94/15**

(84) Benannte Vertragsstaaten: **AT BE CH DE DK ES FR GB IT LI NL SE**

(71) Anmelder: **RÖHM GMBH**
**Kirschenallee**
**D-64275 Darmstadt(DE)**

(72) Erfinder: **Kerscher, Volker, Dr.**
**Waldstrasse 58**
**D-64354 Reinheim(DE)**
Erfinder: **Kleine-Doepke, Wolfgang, Dr.**
**Meissnerweg 22**
**D-64289 Darmstadt(DE)**
Erfinder: **Oehme, Friedhelm**
**Am Steg 1**
**D-64297 Darmstadt(DE)**

## (54) Verfahren zum Verkleben von amorphen Kunststoffen.

(57) Die Erfindung betrifft ein Verfahren zum Verkleben von Formteilen aus amorphen Kunststoffen mit flüssigen Monomer-Polymer-Mischungen bestehend aus:

A) 20 bis 95 Gew.-% einer monomeren Komponente, aufgebaut aus
  a1) 60 bis 100 Gew.-Teilen einer (Meth)acryl-Verbindung,
  a2) 0 bis 40 Gew.-Teilen eines mehrfunktionellen (Meth)acrylats und
  a3) 0 bis 10 Gew.-Teilen eines Pfropfvernetzers,
B) 5 bis 80 Gew.-% eines Polymerisats, das in Komponente A) löslich ist, sowie aus
C) 0,1 bis 15 Gew.-% eines Radikalbildners,

dadurch gekennzeichnet, daß das Gießharz zwischen die Fügeflächen der Kunststoff-Formteile aufgebracht wird und mit Hilfe einer Mikrowellenquelle ausgehärtet wird und daß dadurch eine mechanisch feste Verklebung der Formteile erreicht wird.

EP 0 591 879 A1

Gebiet der Erfindung

Die Erfindung betrifft ein Verfahren zum Verkleben von amorphen Kunststoffen mit flüssigen Monomer-Polymer-Mischungen (Gießharz), wobei die mit Gießharz beschichteten Fügeflächen einer Mikrowellenstrahlung ausgesetzt werden und dadurch innerhalb kurzer Zeit eine ausreichend feste Verklebung erzielt wird.

Stand der Technik

Verfahren zum Verkleben von amorphen Kunststoffen sind bekannt. Hierbei seien beispielsweise folgende Klassen von Klebern genannt:

1.) lösungsmittelhaltige Kleber
2.) radikalisch kalthärtende Monomer und gegebenenfalls Polymer enthaltende Kleber
3.) radikalisch strahlenhärtende Monomer und gegebenenfalls Polymer enthaltende Kleber
4.) Reaktivkleber wie beispielsweise Polyurethankleber oder Epoxidharzkleber.

Die unter Punkt 3.) genannten strahlenhärtbaren Systeme bestehen im allgemeinen aus radikalisch polymerisierbaren mono- und mehrfunktionellen Monomeren, gegebenenfalls einem weiteren Lösungsmittel, im Monomeren gelösten Polymerisatanteilen sowie besonderen Photoinitiatoren, die im Wellenlängenbereich zwischen 200 und 600 nm Lichtenergie aborbieren und in Radikale zerfallen. Beispielhaft für Photoinitiatoren seien genannt: Benzoin, Diisopropylxanthogendisulfid, aromatische Disulfide, Trimethylbenzoyldiphenylphosphinoxid, sowie beispielsweise 2,3-Bornandion für einen Wellenlängenbereich des absorbierten Lichts zwischen 420 und 460 nm.

Ein weiterer interessanter Wellenlängenbereich ist der der Mikrowellenstrahlung, in dem ebenfalls ein hoher Energieeintrag in flüssige Medien möglich ist. Die Wellenlängen liegen zwischen 1 mm und 1 m.

Jpn. Kokkai Tokkyo Koho JP 01 95 174 beschreibt Klebstoffe, die thermisch vernetzende Polymerisate, wie beispielsweise Epoxyharze, Salze polymerer Säuren, beispielsweise Natrium-Polystyrolsulfonat, sowie elektrisch leitfähige oder magnetische Teilchen enthalten und die mit Mikrowellenstrahlung einer Wellenlänge $\lambda$ von 0,122 m ausgehärtet werden.

Die mikrowellenunterstützte Vernetzung von Vinylgruppenhaltigen Polymerisaten, die auch Bestandteil von Klebstoffen sein können, ist Gegenstand von Jpn. Kokai Tokkyo Koho JP 02 242 856. Für den Härtungsprozeß sind wiederum feinverteilte, magnetische Teilchen mit einer großen spezifischen Oberfläche und mit einer hohen magnetischen Suszeptibilität, wie Magnetit oder Barumtitanat, notwendig.

In US-Patent 4 253 898 wird die Verklebung von Polyvinylchlorid-Formteilen mit einem Kleber beschrieben, der aus einer Dispersion bestehend aus Polyvinylchlorid (PVC), Plastifizierungsmittel, Vernetzungsmittel, wie beispielsweise mehrfunktionelles Methacrylat, Polymerisationsinitiator sowie einer Verbindung mit einer Dielektrizitätskonstante $\epsilon > 35$ aufgebaut ist.

Nach 3-minütiger Bestrahlung mit Mikrowellen, die eine Wellenlänge von $\lambda = 0{,}12$ m aufweisen, kann ein Verbund aus zwei PVC-Platten mit einer Zwischenschicht aus o.g. Kleber mit der Hand nicht mehr getrennt werden.

WO 88/09712 beschreibt Methode und Vorrichtung für eine wenigstens teilweise Aushärtung von Dichtmassen und Klebstoffen mit Mikrowellen. Als Beispiel wird die Befestigung von Windschutzscheiben in Automobilen mit einem Polyurethankleber angeführt, mit dem eine schnelle Aushärtung erzielt wird.

V.K. Varadan und V.V. Varadan stellen in Polym. Eng. Sci. 31(7), Seiten 470 bis 486 (1991) eine neuartige Technik für das Verbinden und die Reparatur von Thermoplast-Formteilen, die beispielsweise aus Acrylnitril-Butadien-Styrol-Terpolymerisat, Polycarbonat oder Polymethylmethacrylat bestehen können sowie von Duroplasten mittels Mikrowellen vor. Eine verbesserte Aufheizung der o.g. Werkstoffe und damit eine zuverlässige Verbindung der Formteile wird beispielsweise durch Einlagerung von leitfähigen Polymerisaten in die Werkstoffe oder in Klebstoffilme sowie durch Bündelung der Mikrowellenstrahlung auf die Reparaturstelle erreicht, wobei die Mikrowellenquelle ein 500 Watt-Sender mit Wellenlängen $\lambda$ zwischen 0,12 und 0,6 m ist.

Aufgabe und Lösung

Die in der Beschreibung des Standes der Technik unter den Punkten 1.) bis 4.) angeführten Verfahren zum Verkleben von Kunststoffen weisen beim Einsatz als Konstruktionsklebstoff für das Verkleben von Spritzgußteilen bei Fertigungstechnik mit kurzen Taktzeiten, beispielsweise einer Fließbandfertigung im Anschluß an kontinuierlich arbeitende Spritzgußmaschinen, den Nachteil auf, daß keine ausreichend feste Verbindung der zu fügenden Formteile innerhalb der Taktzeit erreicht werden kann.

Die meisten kalthärtenden, thermisch- sowie feuchtigkeitshärtenden Systeme weisen Härtungszeiten zwischen minimal 10 Minuten und etlichen Stunden auf, was für getaktete Fertigung in den meisten Fällen prohibitiv ist. Im Falle der UV-härtenden Systeme ist oftmals keine ausreichende Aushärtung der Klebestelle wegen der UV-Absorption der zu verklebenden Formteile, beispielsweise bei eingefärbten Kunststoffen, erzielbar. Aus den vorgenannten Gründen wird technisch bis heute noch nicht die Fügung von Formteilen unter alleiniger Verwendung eines Klebstoffes, d.h. ohne Verwendung von Hilfsmitteln zur Fixierung der Fügestellen, in Großserien durchgeführt.

Die in Jpn. Kokai Tokkyo JP 01 95 174, JP 02 242 856 und JP 61 171 783 beschriebenen Verfahren zum Verkleben von Formteilen mit mikrowellen-härtenden Systemen weisen zwar kurze Fügezeiten im Minutenbereich auf, umfassen jedoch Klebstoff-Formulierungen, die magnetische oder elektrisch leitfähige Komponenten enthalten, die einerseits mit dem im Klebstoff enthaltenden Polymerisat unverträglich sind andererseits beim Verkleben von transparenten Formteilen eingetrübte Klebenähte ergeben.

Mikrowellen-härtende Klebstoffe nach US 4 253 898 umfassen Dispersionen, die Verbindungen mit hohen Dielektrizitätskonstanten und Polyvinylchlorid enthalten.

Auch hier sind Unverträglichkeiten und damit Eintrübungen der Klebenähte bei der Verklebung von thermoplastischen Kunststoffen zu erwarten.

Das in WO 88/09 712 beschriebene Verfahren zur Aushärtung von Dichtungsmassen oder Klebstoffen enthaltend Polyurethan ist speziell auf den Einbau von Windschutzscheiben in feste Rahmen von Automobilen gerichtet. Diese Fügebedingungen sind nicht mit denjenigen, wie sie beim Verkleben von Kunststoff-Formteilen vorliegen, vergleichbar.

Die von V.K. Varadan und V.V. Varadan vorgestellte Methode zum Verbinden von Thermoplast-Formteilen setzt Klebstoffe mit leitfähigen Komponenten sowie die Bündelung der Mikrowellenstrahlung auf die Klebestelle voraus.

Die daraus resultierende Aufgabe, ein Klebstoffsystem aufzufinden, das die Verklebung von amorphen Kunststoffen mit Mikrowellenstrahlung innerhalb kurzer Zeit ohne Anteile an elektrisch leitfähigen oder magnetisch suszeptiblen Komponenten erlaubt, wird überraschenderweise durch Gießharz-Formulierungen auf (Meth)acrylat-Basis gelöst.

Die Erfindung betrifft ein Verfahren zum Verkleben von Formteilen aus amorphen Kunststoffen mit flüssigen Monomer-Polymer-Mischungen (Gießharze), bestehend aus

A) 20 bis 95 Gew.-% einer monomeren Komponente, aufgebaut aus:

a1) 60 bis 100 Gew.-Teilen einer oder mehrerer Verbindungen der Formel I

$$CH_2 = \overset{R_1}{\overset{|}{C}} - \overset{O}{\overset{\|}{C}} - Y - R_2 \qquad (I),$$

worin

$R_1$ für Wasserstoff oder Methyl,

$R_2$ für einen linearen oder verzweigten Alkylrest mit 1 bis 18 Kohlenstoffatomen, für einen gegebenenfalls mit weiteren Alkyl- oder Alkoxyresten, die 1 bis 8 Kohlenstoffatome aufweisen können, substituierten Cycloalkylrest mit 4 bis 12 Kohlenstoffatomen, für einen gegebenenfalls mit weiteren Alkyl- oder Alkoxyresten, die 1 bis 8 Kohlenstoffatome aufweisen können, substituierten Arylrest mit 6 bis 10 Kohlenstoffatomen oder für einen gegebenenfalls mit weiteren Alkylresten, die 1 bis 8 Kohlenstoffatome aufweisen können, substituierten heterocyclischen Rest mit 3 bis 15 Kohlenstoffatomen, der mindestens ein Stickstoffatom und/oder Sauerstoffatom im Heterocyclus enthält, sowie

Y für -O-, -S-, -NH-, $-NR_2-$ oder $-(O-Z)_n-$ mit Z für einen linearen oder verzweigten Alkylrest mit 2 bis 6 Kohlenstoffatomen und

n für eine ganze Zahl zwischen 1 und 20

stehen,

a2) 0 bis 40 Gew.-Teilen, vorzugsweise 0,1 bis 35 Gew.-Teilen, eines mehrfunktionellen (Meth)acrylats der Formel II:

$$CH_2 = \overset{R_3}{C} - \overset{O}{C} - O - X -[O - \overset{O}{C} - \overset{R_3}{C} = CH_2]_m \qquad (II),$$

worin

$R_3$ für Wasserstoff oder Methyl,

m für 1 bis 3, sowie

X für einen aliphatischen, cycloaliphatischen, araliphatischen oder heteroaliphatischen Rest mit 1 bis 40 Kohlenstoffatomen und einer Funktionalität m + 1

steht und

a3) 0 bis 10 Gew.-Teilen, vorzugsweise 0,1 bis 8 Gew.-Teilen eines Pfropfvernetzers

wobei sich die Monomerkomponenten a1), a2) und a3) in der Komponente A) zu 100 Gew.-Teilen ergänzen, und aus

B) 5 bis 80 Gew.-% eines Polymerisats, das in Komponente A) löslich ist und nach Polymerisation der Bestandteile der Komponente A) mit dem gebildeten Polymerisat AA) eine verträgliche Polymermischung PM bildet, sowie aus

C) 0,1 bis 15 Gew.-% eines die Polymerisation von A) auslösenden Radikalbildners,

wobei sich die Komponenten A), B) und C) im Gießharz zu 100 Gew.-% ergänzen und wobei das Gießharz zwischen die Fügeflächen der Kunststoff-Formteile aufgebracht wird und einer Mikrowellenstrahlung einer Frequenz zwischen 300 MHz und 300 GHz ausgesetzt wird und eine mechanisch feste Verklebung der Kunststoff-Formteile erreicht wird. Gegebenenfalls kann die Verklebung bei einer Temperatur von oberhalb 50 Grad C, jedoch höchstens 10 Grad C unterhalb der Glastemperatur der zu verklebenden Kunststoffe, innerhalb eines Zeitraums zwischen 5 und 50 Minuten nachgehärtet werden. Gemäß einer speziellen Ausführungsform des Verfahrens wird das Gießharz auf die Fügefläche eines Formteils aufgebracht, mit Mikrowellen bestrahlt und erst danach mit der Fügefläche eines anderen Formteils in Kontakt gebracht, wobei die Fügeflächen solange fixiert werden, bis eine ausreichende mechanische Festigkeit der Klebenaht erreicht ist. Die Fügefläche des Formteils ohne Gießharz-Beschichtung kann hierbei vor dem Zusammenfügen auf mindestens 30 Grad C bis maximal 10 Grad C unterhalb der Glastemperatur des Formteils erwärmt werden.

Durchführung der Erfindung

Die Bestandteile der monomeren Komponente A)

Bestandteile a1) der Komponente A) können gemäß Formel I in Anspruch 1 beispielsweise sein: Methacrylate wie z.B. Methyl(meth)acrylat, Ethyl(meth)acrylat, Propyl(meth)acrylat, Butyl(meth)acrylat, Isobutyl(meth)acrylat, Hexyl(meth)acrylat, Octyl(meth)acrylat, 2-Ethylhexyl(meth)acrylat, Decyl(meth)acrylat, Isodecyl(meth)acrylat, Dodecyl(meth)acrylat, Tetradecyl(meth)acrylat, Hexadecyl(meth)acrylat, Octadecyl(meth)acrylat, Cyclopentyl(meth)acrylat, Cyclohexyl(meth)acrylat, 3,3,5-Trimethylcyclohexyl(meth)acrylat, 3-Cyclohexylpropyl(meth)acrylat, Cyclooctyl(meth)acrylat, Phenyl(meth)acrylat, 2-Phenylethyl(meth)acrylat, 3-Phenylpropyl(meth)acrylat, 4-Methylphenyl(meth)acrylat, 2-Naphthyl(meth)acrylat oder (Meth)acrylate mit heterocyclischen Substituenten wie beispielsweise 2,2-Dimethyl-1,3-dioxolan-4-yl(meth)acrylat, Tetrahydrofurfuryl(meth)acrylat, Furfuryl(meth)acrylat oder 2,2,6,6-Tetramethylpiperidyl(meth)acrylat;

Methacrylamide wie beispielsweise N-Methyl(meth)acrylamid, N-Butyl(meth)acrylamid, N-tert-Butyl(meth)-acrylamid, N-Cyclohexyl(meth)acrylamid, N-Phenyl(meth)acrylamid, N-Benzyl(meth)acrylamid, N-(4-Morpholinomethyl)(meth)acrylamid, N-(1-Piperidinylmethyl)(meth)acrylamid oder 3-(2-Benzotriazolyl)-2-hydroxy-5-tert-octylbenzyl(meth)acrylamid;

(Meth)acrylthioester wie beispielsweise Thiomethyl(meth)acrylat, Thiocyclohexyl(meth)acrylat, Thiophenyl(meth)acrylat oder Thiofurfuryl(meth)acrylat sowie Alkoxy- oder alkoxylierte (Meth)acrylate wie beispielsweise 2-Methoxyethyl(meth)acrylat, 2-Phenoxyethyl(meth)acrylat, 2-(2-Ethoxyethoxy)ethyl(meth)acrylat, oder 2-[2-(2-Ethoxyethoxy)ethoxyl]ethyl(meth)acrylat. Vorzugsweise wird als Bestandteil von a1) Methylmethacrylat in Anteilen von mehr als 50 Gew.-%, besonders bevorzugt von mehr als 70 Gew.-% verwendet.

Als Bestandteile a2) der Komponente A) können gemäß Formel II in Anspruch 1 beispielsweise eingesetzt werden: Di(meth)acrylate wie beispielsweise Diethylenglykoldi(meth)acrylat, Neopentylglykoldi(meth)acrylat, Hexandiol-1,6-di(meth)acrylat, 3,4-Dithiahexandioldi(meth)acrylat, Dodecandiol-1,12-di(meth)acrylat, 7,7,9-Trimethyl-4,13-dioxo-3,14-dioxa-5,12-diazahexadecan-1,16-dioldi(meth)acrylat, Trimethylolpropandi(meth)-acrylat oder Hydrochinondi(meth)acrylat;

Tri(meth)acrylate wie beispielsweise Glycerintri(meth)acrylat, Trimethylolpropantri(meth)acrylat oder tetrafunktionelle (Meth)acrylate wie beispielsweise Pentaerythrittetra(meth)acrylat.

Darüber hinaus kann Bestandteil a2) der Komponente A) teilweise oder vollständig aus den bekannten vernetzenden Monomeren mit mindestens zwei radikalisch aktivierbaren C = C-Doppelbindungen im Molekül, außer den schon genannten (Meth)acryl-Verbindungen, ausgewählt werden. Beispielhaft hierfür seien

Divinylbenzol, Diallylphthalat oder 1,4-Butandioldivinylether genannt.
Pfropfvernetzer a3) weisen mindestens zwei polymerisierbare Gruppen unterschiedlicher Reaktivität auf, wobei dies bevorzugt radikalisch aktivierbare C = C-Doppelbindungen sind. Damit unterscheiden sich die Komponenten a3) und a2) charakteristisch. Beispielsweise können als Pfropfvernetzer Triallylcyanurat oder besonders bevorzugt Allyl(meth)acrylat eingesetzt werden.

Die Bestandteile der polymeren Komponente B)

Die polymere Komponente B) ist in den monomeren Bestandteilen der Komponente A) löslich und nach erfolgter Polymerisation der Komponente A) mit dem gebildeten Polymerisat AA) verträglich.
Die Charakterisierung der Polymermischungen PM, bestehend aus den Polymerisaten AA) und B), als verträgliche Mischungen erfolgt nach den anerkannten Kriterien (vgl. hierzu Kirk-Othmer, Encyclopedia of Chemical Technology, 3rd. Ed., Vol. 18, Seiten 457 bis 460, J. Wiley & Sons, 1982; J. Brandrup, E.H. Immergut, Polymer Handbook, 2nd Ed. III, Seite 211, Wiley Interscience, 1975).Bei den Polymermischungen PM beobachtet man einen Brechungsindex und eine einzige Glastemperatur, die zwischen denjenigen der beiden Polymerisat-Komponenten AA) und B) liegt.

Als weiterer Hinweis auf die Verträglichkeit von Polymermischungen PM wird für den Fall, daß sich die Polymerisate AA) und B) in ihrem chemischen Aufbau unterscheiden, das Auftreten der LCST (Lower Critical Solution Temperature) herangezogen, deren Existenz auf dem Vorgang beruht, daß sich beim Erwärmen die bisher klare, transparente Mischung in verschiedene Phasen auftrennt und optisch trübe wird (vgl. beispielsweise D.R. Paul, Polymer Blends & Mixtures, Seiten 1 bis 3, Martinus Nijhoff, Publishers, Dordrecht, Boston, 1985).
Die erfindungsgemäßen Polymermischungen PM, bestehend aus den Polymerisaten AA) und B) besitzen LCST-Temperaturen, die über den Temperaturen liegen, denen die Klebenaht beim Bestrahlen mit Mikrowellen bzw. beim nachfolgenden Härungsprozeß, beispielsweise in einem Wärmeschrank, ausgesetzt ist. Vorzugsweise liegen die LCST-Temperaturen mindestens 20 Grad C über den o.g. Verarbeitungstemperaturen.
Als Bestandteile der polymeren Komponenten B) können (Meth)acryl-Verbindungen der Formel II in Anspruch 1, wie oben beispielhaft ausgeführt, dienen. Weiterhin können für B) mit den Methacryl-Polymerisaten AA) verträgliche Polymerisate wie Polystyrole (z.B. US-Patente 4 898 912, 4 849 479, 4 889 894), Polycarbonate (z.B. US-Patente 4 749 749, 4 950 715, 4 906 969), Polyester (EP-A 440 034), Polyalkylenoxide (EP-A 329 028), Polyvinylchlorid oder Polyvinylfluorid (vgl. z.B. EP-Patent 203 487), Polyphenylenether (EP-A 462 505) sowie weitere thermoplastische Polymerisate eingesetzt werden. Die polymeren Komponenten B) besitzen im allgemeinen mittlere Molekulargewichte Mw zwischen $5 \times 10^3$ und $10^6$ Dalton, bevorzugt zwischen $2 \times 10^4$ und $5 \times 10^5$ Dalton, wie sie beispielsweise mit Hilfe der Gelpermeationschromatographie oder der Streulichtmethode bestimmbar sind (vgl. hierzu z.B. H.F. Mark et al., Encyclopedia of Polymer Science and Technology, Vol., 10, Seiten 1 bis 19, J. Wiley, 1987). Sie sind in den monomeren Bestandteilen der Komponente A) löslich (zur Löslichkeit von Polymerisaten vgl. beispielsweise J. Brandrup, E.H. Immergut, Polymer Handbook, 3rd. Ed., Kapitel VII, J. Wiley 1989).
Bevorzugt verwendet werden Polymerisate B) mit derselben monomeren Zusammensetzung wie Komponente A). Besonders bevorzugt sind Polymerisate B) mit einem Gehalt an Methylmethacrylat von mehr als 50 Gew.-%, ganz besonders bevorzugt mit einem Gehalt an Methylmethacrylat von mehr als 70 Gew.-%.

Die Radikalbildner C)

Die zur Härtung der erfindungsgemäßen Gießharze verwendeten Radikalbildner (C) werden vorzugsweise aus der Gruppe bestehend aus Peroxiverbindungen, wie beispielsweise Perester, Percarbonate, Peroxianhydride oder Hydroperoxide, sowie aus der Gruppe der Diazoverbindungen ausgewählt (vgl. hierzu beispielsweise H. Rauch-Puntigam, Th. Völker, "Acryl und Methacrylverbindungen", Springer-Verlag Heidelberg, 1967 oder Kirk-Othmer, Encyclopedia of Chemical Technology, Vol. 1, Seiten 386ff, J. Wiley 1978). Besonders bevorzugt werden Perester und Percarbonate eingesetzt.

Beispielhaft für die Radikalbildner seien genannt: tert-Butylperoctoat, tert-Butylperbenzoat, tert-Butylperpivalat, 2,2-Bis(tert-Butylperoxybutan), tert-Amylperneodecanoat, tert-Amylperpivalat, Diisopropylperoxidicarbonat, Dicyclohexylperoxidicarbonat, Bis(4-tert-Butylcyclohexyl)peroxidicarbonat, Cumolhydroperoxid, 1,4-Diisopropylbenzolmonohydroperoxid, Dicyclohexylperoxid, Dilauroylperoxid, Dioctanoylperoxid, Dibenzoylperoxid, sowie Diazoverbindungen wie 2,2'-Azobis-(isobutyronitril), 1,1'-Azobis-(cyclohexan-1-nitril), Azobis-(isobutanol), Azobis-(isobutylacetat), 2,2'-Azobis-(isobuttersäureamid), 2,2'-Azobis-(2-methylbutan) oder 2,2'-Azobis-[2-(2-imidazolin-2-yl)propan].

Die Polymerisation der monomeren Bestandteile der Komponente A) auslösenden Radikale werden vorzugsweise durch thermisch induzierten Zerfall der Radikalbildner bereitgestellt. Die Radikalbildner C) kommen in Anteilen von 0,1 bis 15 Gew.-% bezogen auf die Summe von A), B) und C) zum Einsatz, bevorzugt in Mengen von 1 bis 12 Gew.-%.

Herstellung und Aufbringen des Gießharzes auf die Fügestelle

Die Polymerisat-Komponente B) wird in den monomeren Bestandteilen der Komponente A), in denen zuvor schon der Radikalbildner C) gelöst worden ist, in den in Anspruch 1 angegebenen Verhältnissen gelöst. Vorzugsweise wird B) in A) bei Temperaturen zwischen Raumtemperatur und 50 Grad C gelöst, wobei bei Temperaturen über 30 Grad C der Radikalbildner C) abhängig von dessen Zerfallscharakteristik erst gegen Ende des Löseprozesses zugegeben wird, um eine nennenswerte Radikalbildung vor dem Klebeprozeß zu verhindern.

Bevorzugt werden 10 bis 50 Gew.-%, besonders bevorzugt 20 bis 40 Gew.-% der Polymerisat-Komponente B) in A) gelöst. Der Gehalt an gelöstem Radikalbildner C) liegt zwischen 0,1 und 10 Gew.-%, bevorzugt zwischen 1 bis 5 Gew.-% bezogen auf das Gießharz. Das Auflösen der Komponenten B) und C) in A) erfolgt vorzugsweise mit Hilfe von Rühraggregaten, die besonders bevorzugt eine hohe Rührgeschwindigkeit aufweisen.

Die Viskosität der resultierenden Gießharze beträgt zwischen 10 und 5 x $10^4$ mPa s, vorzugsweise zwischen $10^2$ und $10^4$ mPa s. Die Topfzeiten der initiatorhaltigen Gießharze liegt je nach Zerfallscharakteristik des Radikalbildners C) zwischen einigen Stunden und mehreren Tagen. Gegebenenfalls muß das Gießharz bei längerer Lagerung gekühlt werden.

Verkleben der Kunststoff-Formteile

Das Gießharz wird auf die Fügestelle der zu verklebenden Kunststoff-Formteile aufgebracht, wobei die beiden Fügestellen der zu verklebenden Kunststoff-Formteile oder nur eine Fügestelle beschichtet werden können. Die Beschichtung kann in an sich bekannten Klebstoff-Auftragetechniken erfolgen, vorzugsweise aus einer elastischen Spritzflasche mit einer Kanüle.

Die Aushärtung der gefügten Formteile erfolgt unter Einwirkung von Mikrowellenstrahlung im Frequenzbereich zwischen 300 MHz und 300 GHz, entsprechend einem Wellenlängenbereich zwischen $10^{-3}$ und 1 m. Bevorzugt sind Strahlenquellen, die im Frequenzbereich zwischen 1 und 10 GHz emittieren und die gegen die Umgebung strahlendicht abgeschlossen sind. Solche geschlossenen Strahlungsquellen werden beispielsweise zum Erwärmen von Lebensmitteln oder zur Metallverarbeitung (Hochfrequenzschweißen) eingesetzt und besitzen beispielsweise Magnetrone oder Klystrone als Strahlenquellen (vgl. z.B. Kirk-Othmer, Encyclopedia of Chemical Technology, 3rd. Ed. Vol. 15, Seiten 495ff, J. Wiley 1981). Die Leistung der Strahlenquellen kann zwischen 10 und $10^4$ Watt liegen, bevorzugt zwischen $10^2$ und 2 x $10^3$ Watt.

Der Aushärtungsprozeß kann unterschiedlich durchgeführt werden. Zum einen werden die Fügestellen der beiden Kunststoff-Formteile nach Aufbringen des Gießharzes zusammengefügt und danach mit Mikrowellen bestrahlt, zum anderen wird eine mit Gießharz beschichtete Fügestelle eines Formteils zunächst mit Mikrowellen bestrahlt (Vorinitiierung) und in einem zweiten Schritt mit dem anderen Formteil zusammengefügt, wobei hier eine nochmalige Mikrowellen-Bestrahlung des Formteileverbundes nachfolgen kann.

Die Fügestellen werden mechanisch so lange fixiert bis eine ausreichende Festigkeit der Klebenaht erreicht wird. Die Fixierung der Fügestellen erfolgt beispielsweise mit Klammern oder vorzugsweise unter dem Eigengewicht der Formteile. Im allgemeinen betragen die Einwirkungszeiten der Mikrowellenstrahlung bei einer mittleren Leistung des Mikrowellenstrahlers von 500 bis 1000 Watt zwischen 10 Sekunden und 10 Minuten, vorzugsweise zwischen 1 und 5 Minuten. Gegebenenfalls wird die ausreichende Festigkeit der Klebenaht erst einige Minuten nach Abschalten des Mikrowellenstrahlers erreicht.

Zur vollständigen Aushärtung der Klebenähte werden die zusammengefügten Formteile thermisch nachbehandelt, beispielsweise durch eine Nachtemperung in einer Wärmezone oder in einem Wärmeschrank. Beim Zerbrechen der solchermaßen verklebten und ausgehärteten Formteile findet man Kohäsionsbruch der Klebenaht.

In einer weiteren Ausführungsform der Erfindung erfolgt die Vorbehandlung und das Zusammenfügen der Formteile sowie die Aushärtung der Klebenähte innerhalb einer Fießbandfertigung. Für die Aushärtung werden hier Mikrowellenzonen und Wärmezonen verwendet, deren Dimensionen sich an der Größe der Formteile sowie an der Fließbandgeschwindigkeit orientieren. Besonders bevorzugt ist die Ausführungsform dann, wenn sich das Verkleben der Formteile an eine Fertigung der Formteile durch kontinuierlich arbeitende Spritzgußmaschinen anschließt, die einen bestimmten Zeittakt vorgeben.

Darüber hinaus ist es möglich, mit dem erfindungsgemäßen Verfahren Kunststoffe mit nicht leitfähigen Materialien, wie beispielsweise Holz, Keramik oder Glas zu verkleben.

Vorteilhafte Wirkungen der Erfindung

Das erfindungsgemäße Verfahren zum Verkleben von Formteilen aus amorphen Kunststoffen mit Mikrowellenstrahlung ermöglicht die Ausbildung mechanisch fester Klebenähte innerhalb eines Zeitraumes von maximal 10 Minuten. Dies ist für Fertigungsprozesse mit Zeittakt von großem Vorteil.

Nach einer anschließenden thermischen Nachbehandlung zur vollständigen Aushärtung zeigen die Klebenähte ausschließlich Kohäsionsbruch.

Als Mikrowellenquellen können beispielsweise handelsübliche Mikrowellen-Haushaltsgeräte zum Einsatz kommen.

Die Topfzeiten der Gießharze, d.h. die Zeiträume, in denen die Gießharze verarbeitet werden können, betragen bis zu einigen Tagen bei vollständigem Erhalt der Aktivierbarkeit der Radikalbildner C) durch die Mikrowellenstrahlung.

Die nach dem erfindungsgemäßen Verfahren resultierenden Klebenähte sind völlig transparent und erlauben somit den Bau von Formkörpern, an die ein hoher Anspruch bezüglich der optischen Transmission gestellt wird, wie beispielsweise Lampengehäuse, Verglasungen, Lichtkuppeln oder optische Komponenten wie beispielsweise Linsen oder Lichtleiter.

BEISPIELE

Beispiel 1:

Herstellung der Gießharze

35 Gew.-% eines Copolymerisats aus 94 Gew.-Teilen Methylmethacrylat und 6 Gew.-Teilen Methylacrylat mit einer spezifischen Viskosität J = 51 bis 56 $cm^3g^{-1}$ (nach ISO 1628-6, Komponente B)), entsprechend einem mittleren Molekulargewicht Mw von ca. 1,1 bis 1,2 x $10^5$ Dalton, wurde bei 45 bis 50 Grad C in einer Mischung von 60 Gew.-% Methylmethacrylat und 5 Gew.-% Allylmethacrylat (Komponente A)) gelöst. Die Viskosität nach Brookfield des resultierenden Gießharzes beträgt 6 000 ± 500 mPa s bei 20 Grad C.

Beispiel 2:

Zugabe der Radikalbildner C) und Verklebung von Kunststoff-Formteilen

Die nachstehend in Tabelle 1 aufgeführten Radikalbildner C1 (t-Butylperoctoat: 95 %ig) und/oder C2 (20 % Diisopropylperoxidicarbonat in Phthalat) werden unter Rühren bei 20 bis 25 Grad C jeweils in 50 g Gießharz gemäß Beispiel 1 gelöst. Verarbeitungsbereite Gießharz-Formulierungen Nr. 1 bis 10 (siehe Tabelle 1) werden in Polyethylen-Spritzfläschchen mit aufgesetzter Polyethylen-Kanüle gefüllt.

Verklebt werden Plättchen aus einem extrudierten und/oder spritzgegossenem Copolymerisat bestehend aus 94 Gew.-% Methylmethacrylat und 6 Gew.-% Methylacrylat (Molekulargewicht Mw ca. 1,1 bis 1,2 x $10^5$ Dalton).

Die Maße der Plättchen betragen 100 x 50 x 3 mm (Extrudat) bzw. 60 x 40 x 30 mm (Spritzling). Dabei ist es für die Eigenschaft der Verklebung unerheblich, ob die Plättchen spritzgegossen oder extrudiert sind, d.h. die Wirksamkeit des Klebeverfahrens ist von dem Grad der Orientierung der Polymermoleküle in den Kunststoff-Formteilen weitestgehend unabhängig.

Die zur Aushärtung der Klebenähte benötigte Mikrowellenstrahlung wird mit einem handelsüblichen Mikrowellengerät der Fa. Panasonic, Typ NE-972/973 erzeugt. Die Frequenz der Mikrowellenstrahlung beträgt 2,45 GHz bei einer Senderleistung von 70 bis 600 Watt.

Die Herstellung der Verklebung und das anschließende Aushärteverfahren wird nach einer der im folgenden angeführten Methoden VA, VB und VC (Tabelle 1) durchgeführt.

Methode VA:

Ein Gießharzstreifen wird auf die Fläche eines der oben beschriebenen Copolymerisat-Plättchen aufgegeben. Anschließend wird dieses zusammen mit einem zweiten, unbeschichteten Plättchen in das

Mikrowellengerät gelegt und für die angegebene Zeitdauer mit der Maximalleistung von 600 Watt bestrahlt (Spalte "Vorinitiierung" in Tabelle 1). Nach der Bestrahlung und der Entnahme aus dem Mikrowellengerät wird das zweite Plättchen mit der Kante auf das auf dem ersten Plättchen befindliche Gießharz aufgelegt und solange manuell fixiert, bis die Klebenaht qualitativ als fest bezeichnet werden kann (Spalte "Zustand der Klebenaht nach bestimmter Zeit" in Tabelle 1). In Beispiel 2/10 beträgt die Bestrahlungszeit 1 Minute sowie die zur Fixierung notwendige Zeit nach der Entnahme aus dem Mikrowellengerät 30 Sekunden.

Methode VB:

Ein Gießharzstreifen wird auf die Fläche eines der oben beschriebenen Copolymerisat-Plättchen aufgegeben und anschließend ein zweites unbeschichtetes Plättchen mit der Kante auf den Gießharzstreifen aufgelegt. Dieser Teilverbund wird im Mikrowellenofen für eine angegebene Dauer (Spalte "Bestrahlungszeit" in Tabelle 1) mit der Maximalleistung von 600 Watt bestrahlt. Nach der Entnahme aus dem Mikrowellengerät vergeht gegebenenfalls noch eine bestimmte Zeit bis eine ausreichende Festigkeit der Klebenaht erreicht wird (Spalte "Zustand der Klebenaht nach bestimmter Zeit" in Tabelle 1). In den Beispielen 2/1 bis 2/3 und 2/5 bis 2/8 beträgt die Bestrahlungszeit zwischen 2 und 4 Minuten sowie die zur Aushärtung notwendige Zeit nach der Entnahme aus dem Mikrowellengerät zwischen 0 und 2 Minuten. Die in Beispiel 2/4 verwendete Bestrahlungszeit von 1 Minute war zu kurz, um die notwendige Aushärtung der Klebenaht zu bewirken.

Methode VC:

Es wird eine aus Verfahrensmethoden VA und VB gemischte Verfahrensweise angewendet, wobei nach einer Vorinitiierung und dem Zusammenfügen der Plättchen eine nochmalige Bestrahlung des gefügten Verbundes im Mikrowellengerät erfolgt. Gemäß Beispiel 2/9 betragen Vorinitiierungsphase und Bestrahlungszeit des Teileverbundes jeweils 1 Minute. Nach Entnahme des Teileverbundes aus dem Mikrowellengerät ist direkt eine ausreichende Festigkeit der Klebenaht festzustellen. In allen Fällen (Methode VA bis VC) kann durch eine Nachtemperung der gefügten Teile im Wärmeschrank bei 80 Grad C innerhalb von 15 Minuten eine vollständig ausgehärtete Klebenaht erhalten werden.
Die Topfzeiten, d.h. die Zeiträume in denen das Gießharz verarbeitet werden kann, liegen für die Beispiele 2/1 bis 2/6 bei mehr als 16 Stunden bei 23 Grad C, für die Beispiele 2/7 bis 2/10, die den Radikalbildner Diisopropylperoxodicarbonat enthalten, bei 3 Stunden bei 23 Grad C und bei mehr als 48 Stunden bei 6 bis 9 Grad C.

*TABELLE 1:*

*Verfahren zur Verklebung von spritzgegossenen oder extrudierten Kunststoff-Plättchen gemäß Beispiel 2*

| Nr. | Verfahren | *Radikalbildner* | Topfzeit * *(Stunden)* | Vorinitiierung *(Minuten)* | Bestrahlungszeit *(Minuten)* | Zustand der Klebnaht |
|---|---|---|---|---|---|---|
| 2/1 | VB | 1 % C1 | > 16 | | 4 | nach Entnahme fest |
| 2/2 | VB | 1 % C1 | > 16 | | 3 | nach 10 Sek. fest |
| 2/3 | VB | 1 % C1 | > 16 | | 2 | nach 30 Sek. fest |
| 2/4 | VB | 1 % C1 | > 16 | | 1 | nach > 5 Min. weich |
| 2/5 | VB | 2 % C1 | > 16 | | 2 | nach 30 Sek. fest |
| 2/6 | VB | 5 % C1 | > 16 | | 2 | nach 30 Sek. fest |
| 2/7 | VB | 3 % C2 | 3 ** | | 2 | nach 20 Sek. fest |
| 2/8 | VB | 6 % C2 | 3 ** | | 1 | nach 2 Min. fest |
| 2/9 | VC | 6 % C2 + 5 % C1 | 3 ** | 1 | 1 | nach Entnahme fest |
| 2/10 | VA | 6 % C2 + 5 % C1 | 3 ** | 1 | | nach 30 Sek. fest |

*: bei 23 °C

**: > 48 h bei 6 - 9 °C

## Patentansprüche

1. Verfahren zum Verkleben von Formteilen aus amorphen Kunststoffen mit flüssigen Monomer-Polymer-Mischungen, bestehend aus:

A) 20 bis 95 Gew.-% einer monomeren Komponente, aufgebaut aus:

a1) 60 bis 100 Gew.-Teilen einer oder mehrerer Verbindungen der Formel I

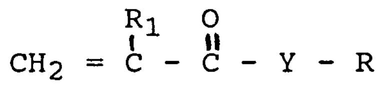 (I),

worin

$R_1$ für Wasserstoff oder Methyl,

$R_2$ für einen linearen oder verzweigten Alkylrest mit 1 bis 18 Kohlenstoffatomen, für einen gegebenenfalls mit weiteren Alkyl- oder Alkoxyresten, die 1 bis 8 Kohlenstoffatome aufweisen können, substituierten Cycloalkylrest mit 4 bis 12 Kohlenstoffatomen, für einen gegebenenfalls mit weiteren Alkyl- oder Alkoxyresten, die 1 bis 8 Kohlenstoffatome aufweisen können, substituierten Arylrest mit 6 bis 10 Kohlenstoffatomen oder für einen gegebenenfalls mit weiteren Alkylresten, die 1 bis 8 Kohlenstoffatome aufweisen können, substituierten heterocyclischen Rest mit 3 bis 15 Kohlenstoffatomen, der mindestens ein Stickstoff- und/oder ein Sauerstoffatom im Heterocyclus enthält, sowie

Y für -O-, -S-, -NH-, $-NR_2-$ oder $-(O-Z)_n-$mit

Z für einen linearen oder verzweigten Alkylrest mit 2 bis 6 Kohlenstoffatomen und

n für eine ganze Zahl zwischen 1 und 20

stehen,

a2) 0 bis 40 Gew.-Teilen eines mehrfunktionellen (Meth)acrylats der Formel II:

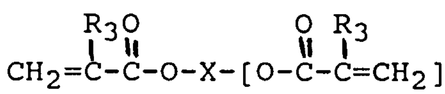 (II),

worin

$R_3$ für Wasserstoff oder Methyl,

m für eine ganze Zahl zwischen 1 und 3, sowie

X für einen aliphatischen, cycloaliphatischen, araliphatischen oder heteroaliphatischen Rest mit 1 bis 4 Kohlenstoffatomen und einer Funktion m + 1

stehen und

a3) 0 bis 10 Gew.-Teilen eines Pfropfvernetzers,

wobei sich die Monomerkomponenten a1), a2) und a3) in Komponente A) zu 100 Gew.-Teilen ergänzen, und

aus

B) 5 bis 80 Gew.-% eines Polymerisats, das in Komponente A) löslich ist und nach der Polymerisation der Bestandteile der Komponente A) mit dem gebildeten Polymerisat eine verträgliche Polymermischung bildet,

sowie aus

C) 0,1 bis 15 Gew.-% eines die Polymerisation von A) auslösenden Radikalbildners,

wobei sich die Komponenten A), B) und C) des Gießharzes zu 100 Gew.-% ergänzen,

dadurch gekennzeichnet,

daß das Gießharz zwischen die Fügeflächen der Kunststoff-Formteile aufgebracht wird und mit Hilfe einer Mikrowellenquelle ausgehärtet wird, die Mikrowellenstrahlung einer Frequenz zwischen 300 MHz und 300 GHz emittiert.

**2.** Verfahren zum Verkleben von Formteilen nach Anspruch 1, dadurch gekennzeichnet, daß die Mikrowellenstrahlung eine Frequenz zwischen 1 und 10 GHz aufweist.

**3.** Verfahren zum Verkleben von Formteilen nach den Ansprüchen 1 und 2, dadurch gekennzeichnet, daß die mit Mikowellenstrahlung ausgehärteten Klebenähte bei einer Temperatur oberhalb von 50 Grad C, jedoch höchstens 10 Grad C unterhalb der Glastemperatur der zu verklebenen Kunststoffe thermisch nachgehärtet werden.

4. Verfahren zum Verkleben von Formteilen nach Anspruch 3, dadurch gekennzeichnet, daß die Zeit für die thermische Nachhärtung zwischen 5 und 50 Minuten liegt.

5. Verfahren zum Verkleben von Formteilen nach den Ansprüchen 1 bis 4, dadurch gekennzeichnet, daß das Gießharz zunächst auf die Fügefläche eines Formteils aufgebracht und mit Mikrowellen bestrahlt wird und danach mit der Fügefläche eines zweiten Formteils in Kontakt gebracht wird, wobei die Fügeflächen solange fixiert werden, wie eine ausreichende mechanische Festigkeit der Klebenaht erreicht ist.

6. Verfahren zum Verkleben von Formteilen nach Anspruch 5, dadurch gekennzeichnet, daß das zweite Formteil vor dem Kontakt mit dem Formteil, das Gießharz auf der Fügefläche aufweist, auf eine Temperatur von mindestens 30 Grad C und höchstens 10 Grad C unterhalb der Glastemperatur der zu verklebenden Kunststoffe aufgeheizt wird.

7. Verfahren zum Verkleben von Formteilen nach den Ansprüchen 1 bis 6, dadurch gekennzeichnet, daß es Bestandteil einer Fließbandfertigung von Kunststoff-Formteilen ist.

8. Verfahren zum Verkleben von Formteilen nach den Ansprüchen 1 bis 7, dadurch gekennzeichnet, daß der Bestandteil a3) der Komponente A) Allylacrylat und/oder Allylmethacrylat ist.

9. Verfahren zum Verkleben von Formteilen nach den Ansprüchen 1 bis 8, dadurch gekennzeichnet, daß der Bestandteil a1) der Komponente A) mindestens 50 Gew.-Teile Methylmethacrylat enthält.

10. Verfahren zum Verkleben von Formteilen nach den Ansprüchen 1 bis 9, dadurch gekennzeichnet, daß die polymere Komponente B) mindestens 50 Gew.-Teile Methylmethacrylat enthält.

11. Verfahren zum Verkleben von Formteilen nach den Ansprüchen 1 bis 10, dadurch gekennzeichnet, daß eine Fügefläche aus Glas, Keramik oder Holz besteht.

Europäisches Patentamt

# EUROPÄISCHER RECHERCHENBERICHT

Nummer der Anmeldung
EP 93 11 5954

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| Y | GB-A-2 193 967 (G-C SHIKA KOGYO KABUSHIKI KAISHA)<br>* Seite 2, Zeile 49 - Seite 3, Zeile 29 *<br>* Seite 4, Zeile 13 - Seite 5, Zeile 13 * | 1-11 | B29C65/14<br>C09J4/06<br>//B29K33:04 |
| Y | EP-A-0 452 540 (HERAEUS KULZER)<br>* Seite 2, Zeile 13 - Zeile 47 * | 1-11 | |
| A | DE-A-30 35 233 (IMCHEMIE KUNSTSTOFF)<br>* Seite 5, Zeile 19 - Seite 6, Zeile 16 * | 1-11 | |
| A | DATABASE WPI<br>Week 8548,<br>Derwent Publications Ltd., London, GB;<br>AN 85-300606<br>& JP-A-60 209 070 (TORAY IND.) 21. Oktober 1985<br>* Zusammenfassung * | 1 | |
| A | MACHINE DESIGN<br>Bd. 42, Nr. 24 , 1. Oktober 1970<br>Seiten 88 - 93<br>G. M. W. BADGER 'Microwave heating'<br>* das ganze Dokument * | 1 | **RECHERCHIERTE SACHGEBIETE (Int.Cl.5)**<br>B29C<br>C09J<br>C08F |

Der vorliegende Recherchenbericht wurde für alle Patentansprüche erstellt

| Recherchenort | Abschlußdatum der Recherche | Prüfer |
|---|---|---|
| DEN HAAG | 17. November 1993 | ATTALLA, G |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)